# EUROPEAN PATENT SPECIFICATION

(11) **EP 3 193 633 B1**
(45) Date of publication and mention of the grant of the patent: **29.10.2025**
(21) Application number: 15772145.7
(22) Date of filing: 17.09.2015
(51) Int. Cl.: A23B 2/08, A23B 2/22

(54) **A MICROWAVE RETORT SYSTEM AND PROCESS FOR HEATING FOOD PRODUCTS USING A MICROWAVE RETORT SYSTEM**
MIKROWELLENRETORTENSYSTEM UND VERFAHREN ZUR ERWÄRMUNG VON LEBENSMITTELPRODUKTEN MITHILFE EINES MIKROWELLENRETORTENSYSTEMS
SYSTÈME D'AUTOCLAVE À MICRO-ONDES ET PROCÉDÉ PERMETTANT DE CHAUFFER DES PRODUITS ALIMENTAIRES AU MOYEN D'UN SYSTÈME D'AUTOCLAVE À MICRO-ONDES

(30) Priority: 17.09.2014 US 201462051601 P
(43) Date of publication of application: 26.07.2017
(73) Proprietor: 915 Labs, LLC, Centennial, Colorado 80112 (US)
(72) Inventor: HIRSCHEY, John A., Winnetka, Illinois 60093 (US); REEVE, Michele L., Glenview, Illinois 60025 (US); CASSEL, John M., Glenview, Illinois 60025 (US); BREJCHA, Lisa J., Evanston, Illinois 60202 (US); LEGAN, James David, Libertyville, Illinois 60048 (US); MOHR, Lea Michele, Wadesville, Indiana 47638 (US)
(74) Representative: Loo, Chi Ching
(86) International application number: PCT/US2015/050650
(87) International publication number: WO 2016/044571

(56) References cited:
- EP-A1- 0 350 564
- FR-A1- 2 341 277
- GB-A- 2 030 038
- US-A- 3 814 889
- US-A- 4 624 854
- US-A- 5 750 966
- US-A1- 2005 127 068

## Description

### FIELD

The present application relates to a microwave retort system, a process for heating food products using a microwave retort system, such as to sterilization temperatures, and food products formulated for microwave retort.

### BACKGROUND

Thermal retort processes have long been used to provide commercial pasteurization and sterilization to improve the microbial safety of refrigerated or shelf-stable food products. In retort processes, the products are heated to temperatures effective to inactivate microorganisms, including spoilage or pathogenic microorganisms, which may be present in the food. Conventional thermal retort processes generally require high temperature treatment for upwards of 40 minutes including heating, holding, and cooling stages. The most common retort sterilization processes include water immersion and saturated steam processes. In saturated steam processes, a retort vessel containing packaged products (e.g., in pouches, containers, or cans) is filled with steam for about 30 to about 120 minutes. In water immersion processes, the food products are immersed in hot water under pressure in a retort vessel.

While acceptable sterilization may be achieved by these processes, thermal treatment for these lengths of time can result in a number of detrimental effects to the food product, including changes in color, aroma, or texture, denaturation or coagulation of protein, and degradation of vitamins and other nutrients. In conventional retort processes, the geometric center of the food product is typically the coldest part of the product and takes the longest to heat to sterilization temperatures. This can result in uneven heating of the product, whereby certain portions, such as the outer surface or corners, are overcooked relative to the center of the product. Such uneven heating can result in undesirable changes to the food product as compared to a freshly prepared product that has not undergone thermal retort, as well as reduced consumer acceptance of the retorted products.

There has been recent interest in retort processing using microwave energy, but it has not yet been utilized on a commercial scale. Like previous retort systems, microwave retort utilizes the production of heat to inactivate microorganism. Unlike the other retort processes, microwave retort results in food products having a coldest spot that is often not the geometric center of the product.

Microwave assisted thermal sterilization (MATS) is one known technology that provides for microwave sterilization of packaged foods. For example, MATS may use a frequency of 915 MHz. A conventional MATS system is described in U.S. Patent No. 7,119,313 and includes a preheating section, microwave heating section, holding section, and cooling section arranged in series representing four sequential processing steps. Each section of the MATS system described in the '313 patent has a separate water circulation system that includes a pressurized tank and plate heat exchanger to control water flow at a predetermined temperature. A conveyor extends from the preheating section to the cooling section and conveys products through the different sections of the MATS equipment. During the sterilization process, packaged food products are immersed in a water solution in a pressurized vessel. Water is circulated through the cavities together with the food being processed. Advantages of the MATS system as compared to conventional retorting systems include higher throughputs, lower operations costs, and increased ability to sterilize various nonhomogeneous foods. While the MATS system is an improvement over previously available microwave retort systems, MATS technology is still in the beginning stages, and heretofore advances have not been made that allow for implementation on a large commercial scale. Although microwave energy may offer various advantages in thermal sterilization, one of the problems with using microwave energy for the thermal sterilization of food is the lack of uniformity of the electromagnetic field distribution. Another issue is that the MATS system still often results in the edges or outer surfaces of the food can be overheated due to the electric field parallel to the edge of the food. Such limitations may be one reason why microwave systems have not yet been widely used to sterilize foods on a large scale. US 5750966 A discloses a plant for pasteurizing or sterilising solid or liquid food products subjects the previously packaged products to heat treatment using microwaves in a pressurized chamber. GB 2030038 A discloses a method and apparatus for thermal treatment of foodstuff. FR 2341277 A1 discloses method of heating foodstuff by applying microwave radiation as the foodstuff continuously conveyed and immersed in liquids. US 3814889 A discloses a method of heat treating heat-sensitive products. US 2005/127068 A1 discloses an apparatus and method for pasteurizing and/or sterilizing foodstuff with microwaves. US4624854 discloses a method of continuously sterilizing foodstuff and an apparatus suitable for carrying out the method.

### SUMMARY

The present disclosure generally relates to a microwave retort system and a process for heating food products using a microwave retort system, such as to pasteurization and/or sterilization temperatures, as well as to food products formulated for treatment in microwave retort processes. In the systems and processes described herein, packaged food products are at least partially immersed in a liquid medium and treated with microwave energy to heat the products to pasteurization or sterilization temperatures and held at the pasteurization and/or sterilization temperatures for a time sufficient to pasteurize or sterilize the food products. In one aspect, the microwave retort processes and systems described herein heat the food products to pasteurization and or sterilization temperatures while preventing the food product, including outer surfaces, reaching a temperature higher than 135°C. In doing so, at least in some approaches, the microwave retort processes and systems described herein advantageously provide food products with the taste and organoleptic properties equivalent to or nearly equivalent to an otherwise identical freshly prepared product that has not undergone a retort process and significantly better than otherwise identical food products that have undergone a conventional immersion or saturated steam retort process.

In one aspect, a process is provided for pasteurizing or sterilizing a packaged food product using microwave energy as claimed in claim 1.

In one approach, the process may further comprise conveying the packaged food product to a third microwave temperature section and applying microwave energy to the food product for a third period of time, wherein a third liquid medium is provided to the third microwave temperature section: the second liquid medium is less than the pasteurization temperature when pasteurizing the packaged food product or the sterilization temperature when sterilizing the packaged food product, and the third liquid medium has a higher temperature than the second liquid medium and applying microwave energy to the food product for a third period of time while the food product is at least partially submerged in the third liquid medium.

In another approach, the process may further comprise conveying the packaged food product to a plurality of additional microwave temperature sections after the second microwave temperature section. In one aspect, the plurality of additional microwave temperature sections includes 3 to 10 additional microwave temperature sections. In some approaches, the microwave energy applied in the first microwave temperature section has a higher intensity than the microwave energy applied in the second microwave temperature section. In one aspect, the microwave energy applied in the first microwave temperature section may have a higher intensity than the microwave energy applied in the second and third microwave temperature sections.

The first liquid medium and the second liquid medium have a temperature of about 20 to about 95°C, in another aspect about 20 to about 90°C, and in another aspect about 20 to about 85°C during application of the microwave energy. At least in some approaches, each process step may be conducted to avoid any portion of the food product from reaching a temperature of greater than 135°C.

Exemplary food products that may be treated by the processes and systems described herein include pasta, pasta and sauce, macaroni and cheese, meat, meat and sauce, meat with broth, rice dishes, egg dishes, omelets, skillet meals, mashed potatoes, sliced potatoes, diced potatoes, soup, fruit, fish, and beverages. In one particular aspect, the packaged food product may be macaroni and cheese. The food products treated by the processes and systems herein can be in a pouch, rigid container, or flexible container.

In another aspect, a microwave retort system is provided as claimed in claim 11.

In one aspect, the microwave zone may include at least three microwave temperature sections. In another aspect, the microwave zone may include a plurality of microwave temperature sections. In yet another aspect, the microwave zone includes a plurality of microwave temperature sections including the first microwave temperature section and the second microwave temperature section, the plurality of microwave temperature sections further including 3 to 10 additional microwave temperature sections. In some approaches, the microwave retort system may further comprise a hot/cold water separator and a holding zone, wherein the hot/cold water separator may be positioned between the microwave zone and the holding zone.

### BRIEF DESCRIPTION OF THE DRAWINGS

FIG. 1 is a block diagram of a first exemplary microwave retort process.
FIG. 2 is a schematic of an exemplary microwave zone including a plurality of temperature sections.
FIG. 3 is a block diagram of a second exemplary microwave retort process.
FIG. 4 is a schematic of an exemplary microwave retort processing system.
FIG. 5 is a graph of the standard deviation of dielectric loss (ε") at 915 MHz for various cheese sauces.
FIG. 6 is a photograph of a macaroni and cheese product after undergoing a microwave retort process.
FIG. 7 is a photograph of a macaroni and cheese product after undergoing a microwave retort process, where the cheese sauce of the product includes added salt.
FIG. 8 is a photograph of a macaroni and cheese product after undergoing a microwave retort process, where the cheese sauce of the product includes added cream.
FIG. 9 is a graph of core temperature over time during microwave retort of a macaroni and cheese product.
FIG. 10 is a graph of core temperature over time during microwave retort of a macaroni and cheese product, where the cheese sauce includes added salt.
FIG. 11 is a graph of core temperature over time during microwave retort of a macaroni and cheese product, where the cheese sauce includes added cream.
FIG. 12 is a graph of the dielectric loss factor (ε") of cheese sauces as a function of frequency at room temperature.
FIG. 13 includes a graph of the cumulative F₀ and the temperature of the cold spot of the reduced viscosity sample (n=2) after ten microwave passes in a microwave retort process.
FIG. 14 includes a graph of the cumulative F₀ and the temperature of the cold spot of the original (non-reduced) viscosity sample (n=4) after ten microwave passes in a microwave retort process.

### DETAILED DESCRIPTION

The present disclosure generally relates to a microwave retort system, a process for heating food products using a microwave retort system, such as to pasteurization and/or sterilization temperatures, and food products formulated for treatment in microwave retort processes. In the systems and processes described herein, packaged food products are at least partially immersed in a liquid medium and treated with microwave energy to heat the products to pasteurization or sterilization temperatures and held at the pasteurization and/or sterilization temperatures for a time sufficient to pasteurize or sterilize the food products. In one aspect, the microwave retort processes and systems described herein heat the food products to pasteurization and/or sterilization temperatures while preventing the food product, including outer surfaces of the food product from, from reaching a temperature higher than 135°F. In doing so, at least in some approaches, the microwave retort processes and systems described herein advantageously provide food products with the taste and organoleptic properties equivalent to or nearly equivalent to an otherwise identical freshly prepared product that has not undergone a retort process and significantly better than otherwise identical food products that have undergone a conventional immersion or saturated steam retort process.

In some approaches, the retort processes and systems described herein may be used in conjunction with the food formulations described herein. In other aspects, the retort processes and systems described herein may be used with other food formulations. Similarly, the food formulations described herein may be used with other microwave retort processes, although, at least in some approaches, carrying out the retort processes described herein with the food product formulations herein may provide high quality food products with significant improvement in texture, flavor, and color over products produced by currently available microwave retort methods.

Microwave retort utilizes microwave energy to rapidly heat food products in sealed packages to temperatures effective to pasteurize or sterilize the products. The packages are typically completely submerged in water in a microwave chamber during microwave treatment. A rapid heating step is typically followed by a holding step and a rapid cooling step. These rapid heating and cooling steps allow food to be pasteurized and/or sterilized with less total thermal exposure than conventional steam or immersion retorting and can result in significantly improved product quality.

The design and operation of microwave retort systems can be greatly influenced by the properties of the food products processed therein. For example, the number of microwave application points, the power of the microwave generators, the intensity of the microwave energy delivered to the food products, the machine size, the speed of the belt or other conveying mechanism which controls the rate at which product passes through the system, and other factors of machine construction can all be modified independently or in combination to suit the properties of the food product or range of food products being retorted.

Also provided herein are food formulations that may be used with microwave retort pasteurization and/or sterilization processing conditions. In some approaches, the viscosity, dielectric properties, specific heat capacity, mass, and/or density of the product can be controlled to improve product quality obtained from a given microwave retort system or process. For example, varying the concentration of salt or other contributors to dielectric loss while also varying the types and/or concentrations of starches, hydrocolloids, or other controllers of product viscosity allows for the development of novel product formulations that are uniquely suited to provide significantly improved product quality for a particular microwave retort system configuration. Controlling other physical properties or characteristics of the food product may also be advantageous.

At least in some approaches, these formulation changes advantageously provide pasteurized and/or sterilized food products with desirable organoleptic, textural, and visual characteristics. Specifically, these various physical characteristics and properties of the food products to be treated, as well as their interaction with microwave intensity and other retort system variables, impact the product's ability to reach sterilizing temperatures at its coldest point without suffering browning, burning, or production of overcooked or off notes at its hottest point, such as portions of the product's outer surface. For this purpose, use of multi-factorial experimental designs including, at minimum, dielectric properties and thermal properties is a uniquely efficient and novel approach.

At least in some approaches, the advantages described herein can be achieved by making structural and/or processing changes to existing microwave retort equipment. For example, the apparatus of U.S. Patent No. 7,119,313, which is incorporated by reference herein in its entirety, and method of using that apparatus can be modified according to the processes described herein to achieve significantly improved product quality. Other existing equipment includes the "MATS B" production unit from 915 Labs LLC (Centennial, CO).

The microwave retort processes described herein generally involve conveying or otherwise moving a food product through discrete and typically pressurized chambers so as to provide a continuous or semi-continuous process. At least in some approaches, the discrete chambers are separated by one or more gates or doors which are opened and closed as the food product is conveyed from one chamber to the next. The gates are primarily a pressure lock to allow the products to move between chambers, which may be at different pressures and contain liquid medium at different temperatures, without a dramatic loss of pressure or liquid medium from a higher to a lower pressure chamber.

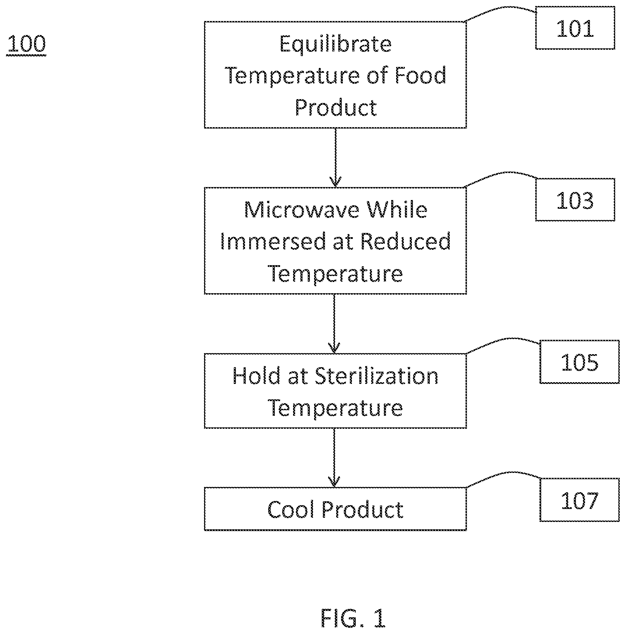

By one exemplary approach and as generally shown in FIG. 1, a microwave retort process 100 is provided by which a shelf-stable food product can be prepared by the successive treatment in a pre-heating zone, a microwave zone, a holding zone, and a cooling zone as explained in more detail below.

In step 101, a packaged food product is placed in a pre-heating zone where the food product is at least partially immersed in a liquid medium and the food product is heated to a desired temperature. In most approaches, the food product is completely immersed in the liquid medium. However, if differential pre-heating is desired, partial immersion of the food product in the liquid medium may be desired. Generally, the food products are provided in appropriate packaging, such as a jar, pouch, or flexible or rigid container. Preheating is used to equilibrate the temperature of the product to above room temperature but generally below sterilization temperatures. This enables more efficient utilization of the microwave energy applied in the microwave zone. The liquid medium in the chamber may be heated by any means known in the art, such as, for example, by application of steam. In at least some approaches, the liquid medium is water, which helps to minimize dielectric loss to the liquid medium during application of microwave energy. Generally, the temperature of the liquid is selected so that the food product may be uniformly heated but not cooked in the pre-heating zone. For instance, when a product is cooked, complex physical and chemical changes begin to occur. Chemical changes that may occur include, for example, caramelization, Maillard reactions, protein denaturation, degradation of starch or other polysaccharides in the food, and generation of undesirable flavor compounds or colors. These and other changes may detrimentally affect certain attributes of the food, such as texture, flavor, color, or other organoleptic properties. Therefore, it is generally preferred that the temperature of the pre-heating step is selected to avoid cooking of the food product.

In one approach, the liquid medium used in the pre-heating step is at a temperature of 50°C to 85°C, and the pre-heating step is carried out for a period of time effective to provide a uniform temperature in the food product of about 50 to about 80°C. The terms "uniformly heated" or "uniform temperature" mean that the coldest spot and the hottest spot of the product are within about 6°C of each other, in another aspect within about 4°C of each other, and in another aspect within about 3°C of each other. The coldest spot can be determined directly by placing multiple thermocouples or other temperature-measuring devices throughout a representative product. The coldest spot can also be estimated by computer modeling. In some products, the coldest spot may also be the geometric center of the product. The hottest spot may or may not be on the exterior surface of the product.

In some approaches, the temperature of the liquid in the pre-heating zone may depend on the type of food product being treated. For example, it is generally thought that dairy-containing products are more susceptible to thermal-mediated degradation or generation of off-flavor notes than certain other food products. Accordingly, at least in some approaches, it may be desirable that a dairy-containing food product be heated to a temperature at the lower end of the described range while there may be more flexibility in selecting a temperature throughout the described range for other food products.

In step 103, the food product is conveyed to a microwave zone where the product is treated with microwave energy. The microwave zone may include one or more microwave temperature sections. Each microwave temperature section may include one or more microwave applicators that may be positioned above, below, and/or at another angle relative to the food product. At least in some approaches, greater uniformity of heating may be achieved with angled microwave application. In one aspect, the microwave applicators may be positioned to deliver microwave energy along the direction of travel in the microwave zone.

It was previously believed to be advantageous to preheat the liquid medium of the microwave chamber. For example, liquid medium temperatures of about 80°C to about 100°C were used for pasteurization treatments and temperatures of about 100°C to about 140°C for sterilization treatments. However, it has now been found that application of microwave energy to a product in a sterilizing water bath temperature of about to 121° to about 135°C can result in minimized microwave penetration into the product, which can result in significant microwave-induced product quality defects, including hotspots on the surface of the product. These are seen at varying intensity across different pouch and tray formats. As food product temperature rises, microwave energy absorptivity increases dramatically across most food products. Equally dramatic is the decrease in microwave energy penetration into the food. The combination of these factors can lead to runaway surface heating and scorching. Currently available microwave retort systems and processes can cause significant product quality defects across the entire range of process set points and product formulations tested. Currently available microwave retort equipment, such as from 915 Labs, can cause wide temperature variation across and between adjacent packages despite nominally identical treatment. For example, temperature variation between products can be measured by cold spot temperature probes.

It is presently believed that a significant percentage of product defects are caused by non-volumetric heating, which is a result, at least in part, of the dielectric properties changing as the temperature of the product increases during heating. The changing dielectric properties impact the penetration depth of the microwaves. When a food product is treated with microwave energy, the penetration depth of the microwave energy depends in part on the dielectric properties of the food product being microwaved. The dielectric loss E" is the ability of a substance to convert electromagnetic energy into heat at a given frequency and temperature. Materials with high dielectric constants may not also have high dielectric loss E" values. Dielectric loss E" values are related to both frequency and temperature. Penetration depth is generally defined as the point where 37% (1/*e*) of the initially irradiated microwave power is still present, and is inversely proportional to dielectric loss E". Accordingly, food products with high dielectric loss E" values generally have low penetration depth values and the microwave energy may be significantly absorbed by the outer portion of the food product. Further, with increasing temperature, the penetration depth for many food products tends to further decrease.

It has been surprisingly found that these defects can be virtually eliminated or significantly reduced by utilizing processing conditions effective to provide a maximum product temperature of below 275°F (135°C) during microwave heating. Currently available microwave retort systems typically utilize a pressurized water bath to attenuate microwave energy at package corners and to prevent sterilization steam pressures from bursting individually sealed packages. Using about 50 to about 90 psi water overpressure can enable microwave-induced instantaneous maximum product temperatures to rise above 300°F (149°C). While these high temperatures may be thought to be beneficial from a microbial inactivation standpoint, these temperatures can cause significant product defects, including defects in flavor (e.g., burnt, scorched, and cooked notes), color (e.g., browning, yellowing, and pinking), and textural changes (e.g., rubbery, soft, and mushy textures).

Contrary to conventional wisdom, it was found that using liquid medium at lower temperatures in the microwave zone at least for a portion of the microwave treatment (in one aspect, the initial microwave treatment) could significantly improve the quality of the food product after retort. This can be applied in a particularly advantageous manner in a microwave zone having two or more temperature sections. In some approaches, a microwave zone with at least two microwave temperature sections may be used. In these approaches, each microwave temperature section may be configured to have a different temperature liquid medium and/or apply a different microwave intensity. For instance, a first microwave temperature section may have a lower liquid medium temperature as described above and a second microwave temperature section may have a higher liquid medium temperature.

In one approach, a microwave temperature zone is provided whereby the temperature of the liquid medium can be controlled to a temperature significantly below sterilization temperatures. For instance, the temperature of the water in the microwave zone may be about 20°C to about 115°C, in another aspect about 20°C to about 110°C, in another aspect about 20°C to about 100°C, in another aspect about 20°C to about 95°C, in another aspect about 20°C to about 90°C, and in another aspect about 20°C to about 85°C. The lower end of the range may depend, at least in part, on the microwave intensity to be applied to the food product when the product is immersed in the liquid medium. For example, if higher intensity microwave energy is to be applied to the product, a relatively cooler temperature liquid medium may be particularly beneficial. For example, a liquid medium of a temperature of about 20°C to about 50°C, in another aspect about 20°C to about 45°C, in another aspect about 20°C to about 40°C, and in yet another aspect about 20°C to about 35°C may be particularly suitable for those approaches.

Conversely, if microwave energy of less intensity is to be applied to the product for either a longer period of time, warmer liquid medium may be acceptable, such as about 65°C to about 115°C, in another aspect about 65°C to about 110°C, in another aspect about 65°C to about 100°C, in another aspect about 65°C to about 100°C, in another aspect about 65°C to about 95°C, in another aspect about 65°C to about 90°C, and in another aspect about 65°C to about 85°C.

It was advantageously found that providing a liquid medium in the microwave temperature zone significantly below sterilization temperatures, as described above, enables the liquid medium to conduct heat away from the surface of the food product during application of microwave energy. This provides several advantages. First, it was found that the lower temperature of the product surface enables the microwave energy to better penetrate the package and volumetrically heat the product. Second, by transmitting the microwave energy deeper into the product, much higher microwave-to-product temperature increase efficiency is achieved. Third, microwave-induced surface heat is more rapidly dissipated to the liquid medium, such that the overall effect is to reverse the cross-sectional product temperature profile from a cold core with an extremely hot surface to a sterilized core with a cooler surface. The use of the cooler liquid medium temperatures advantageously results in significantly reduced product surface overtreatment relative to the product cold spot. This provides significant product benefits compared to products treated by currently available steam retort systems and microwave retort processes.

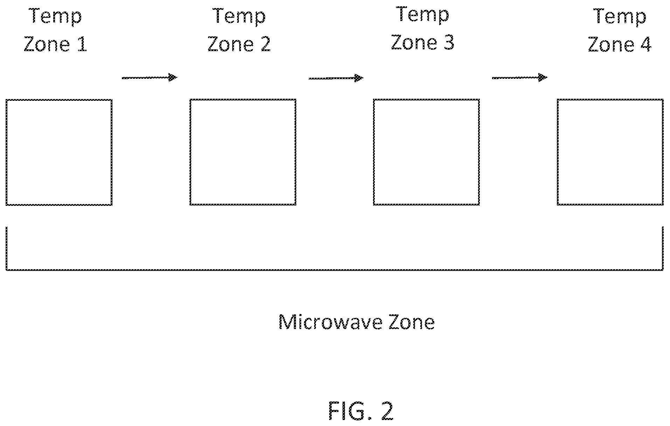

By one approach, a microwave zone with four individual temperature sections is depicted in FIG. 2. In one exemplary approach, the first temperature section that the food product encounters when conveyed through the microwave zone may be the coldest temperature section and the remaining three temperature sections may be at the same or higher temperature. For example, the temperature of the liquid medium in each section may be incrementally increased from one section to the next along the direction of travel.

Further, as noted above, the microwave intensity applied in each section may also differ from one section to another. For instance, in Zone 1 of FIG. 2, when the liquid medium temperature is relatively low (e.g., about 20°C to about 70°C), higher intensity microwave energy may be applied to the product with deeper penetration of the energy to the product cold spot while heat from the surface of the product is dissipated to the cooler liquid medium. Then as the cold spot begins to heat up, the product can be conveyed to further microwave temperature sections in which the microwave intensity is decreased with respect to the previous section and the liquid medium temperature is higher with respect to the previous section. At the last temperature section, the cold spot of the food product should be at or near the desired pasteurization (e.g., about 60 to about 90°C) and/or sterilization temperature (e.g., about 115 to 135°C).

Towards the end of the microwave process, it becomes less important to transfer heat from the exterior surface of the food product to the liquid medium, and the temperature of the liquid medium can be increased to at or near pasteurization and/or sterilization temperatures. Therefore, the temperature of the liquid medium in successive microwave temperature sections can be increased, as needed, so that both the cold spot of the product and the exterior surface both reach pasteurization and/or sterilization temperatures. For example, the liquid medium in the final microwave temperature section may be about 60°C to about 90°C for pasteurization or about 115°C to about 135°C for sterilization.

At least in some approaches, it has been found that utilizing a combination of reduced microwave power or intensity but increased number of microwave application points can result in approximately half of the finished product temperature variability of the currently available processing equipment (e.g., higher microwave power and fewer application points) as measured by cold spot temperature probes.

While reduced microwave power or intensity and/or increased number of microwave temperature sections can result in longer overall microwave treatment time, at least in some approaches the food product can be heated with greater efficiency in terms of the cold spot of the product being heated quickly per kW of energy applied to the product. By lowering process variability, less overall thermal treatment is needed to insure sterility. Thus, the overall benefit of microwave retort sterilization is increased versus standard retorting and significantly improved product quality can be obtained.

In some approaches, the product is held in the microwave zone (including all individual microwave temperature sections) for about 60 seconds to about 10 minutes. The length of time the product is held in the microwave zone may depend, at least in part, on the number of microwave application points, spacing of those application points, and intensity of the microwave energy applied. At least in some approaches, the application points may be spaced closer together as the food product moves downstream though the plurality of microwave temperature sections. Advantageously, this may result in the microwave retort apparatus or system having a smaller machine footprint.

In general, reducing microwave power increases the microwave treatment time required to achieve pasteurization and/or sterilization temperatures. To avoid increasing treatment time, the number of microwave application points or "applicators" can be increased. In one approach, microwave energy is provided from a microwave source, which supplies the energy to microwave waveguides. The microwave source can be any apparatus that produces electromagnetic radiation in the microwave frequency. For example, the microwave source may include a magnetron, klystron, electronic oscillator, and/or solid state source. The waveguides include a generally horn-shaped section, referred to as the "applicator," which is positioned to direct the microwave energy in a desired direction toward the food products. The terms "waveguides" and "applicators" are used herein with the meaning described in U.S. Patent No. 7,119,313, which is incorporated herein by reference. The waveguides may further include a splitter, so that a single microwave source can feed microwaves to multiple applicators. This potentially increases efficiency by allowing the microwave source to operate at a high percentage power output, while each individual application point delivers only a fraction of the total microwave energy to the food product.

In one aspect, the microwave power is about 5 kW to about 40 kW per microwave pass, in another aspect about 10 kW to about 20 kW per microwave pass under each applicator. The precise power level selected may depend, at least in part, on the number of passes being performed, the number of microwave applicators, the speed at which the product is conveyed through the microwave zone, the time between microwave application passes, and the temperature of the liquid medium in a particular temperature section. In one aspect, each pass may range between about 45 seconds to about 1 minute.

In some approaches, reduced microwave power may be used in combination with an increased number of application points. At least for certain food products, such as macaroni and cheese products, it has been found that the combination of lower intensity for longer time, in spaced increments, achieves the desired product sterility but with more desirable product characteristics. For example, the retort system may include from about 4 to about 15 microwave application points, and in another aspect about 8 to about 12 microwave application points. At least in some approaches, the application points are in series as the product passes through the microwave zone. In one aspect, the microwave application points are at least about 12 inches apart.

Each of these aspects may be used alone or in combination. For example, in some food applications, it may be found that use of reduced power may be sufficient and that increasing the number of microwave application points is not needed.

After the microwave treatment, the food product is then conveyed in step 105 to the holding zone to achieve pasteurization and/or sterilization. Preferably, the food product is conveyed to the holding zone to hold the product at a temperature effective to achieve sterilization, which can be defined as an F₀ of 6 to 8. As used herein, pasteurization refers to an at least 5 log reduction of the number of viable pathogenic microorganisms in the product, such as *Listeria monocytogenes.* In one aspect, the product is at least partially immersed, in preferred approaches completely immersed, in a liquid at a temperature of about 115°C to about 135°C, in another aspect about 120°C to about 131°C in the holding zone.

The food product can be held in the holding zone until suitable pasteurization and/or sterilization temperatures are reached for the appropriate amount of time. In some approaches, the product is held in the holding zone for about 3 to about 8 minutes. The temperature and time of residence selected in the holding zone may depend, at least in part, on the ability of the food product to withstand the temperature for a given period of time without adversely affecting the quality of the food product. Generally there is a preference for selecting a temperature towards the upper end of the range if the temperature does not adversely affect the quality of the resulting product.

In step 106, the food product is then conveyed to a cooling chamber where the food product is at least partially immersed, in some approaches completely immersed, in a liquid at a temperature of about 33°C to about 60°C, in another aspect about 35°C to about 45°C to cool the food product to below about 80°F.

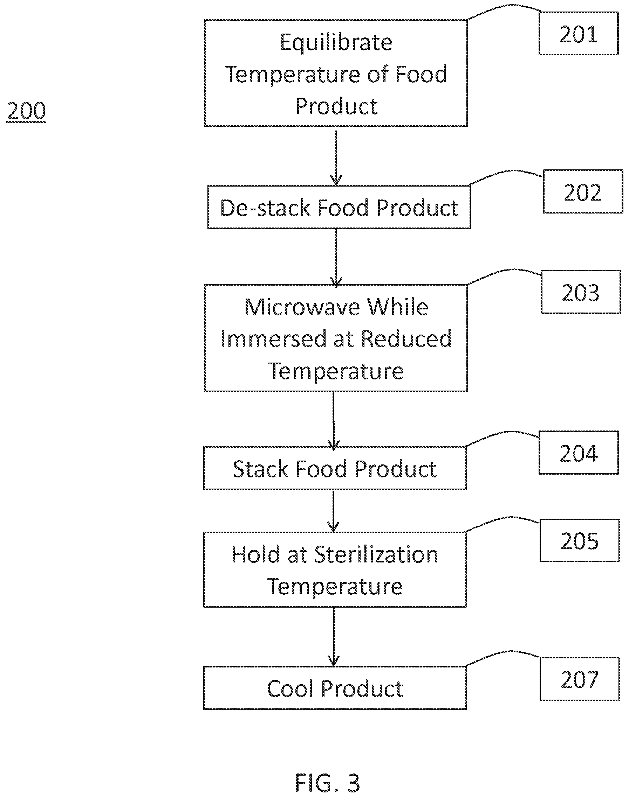

By another exemplary approach and as generally shown in FIG. 3, the process shown in FIG. 1 may include additional steps, if desired. For example, in one approach, to increase the number of products that can be conveyed through the retort system, the products can be conveyed in a stacked configuration with a plurality of rows (e.g., about 5 to about 10 rows) through many of the chambers of the system. However, at least in some approaches, it may be preferred that the food products not be in a stacked configuration during microwave treatment. Therefore, the process of FIG. 3 further includes step 202 where the food product is unstacked prior to being conveyed into the microwave zone. The process of FIG. 2 also includes step 204 where the food products are restacked into a stacked configuration after the product has exited the microwave zone. In some approaches, steps 204 and 205 may be carried out in the same or in separate chambers. The order of steps 204 and 205 may also be reversed, if desired.

Further testing will demonstrate the efficacy of the following approaches to increase the uniformity of heating the food product and/or increasing the rate of heat transfer to the center of the product:
- Vibrating and/or rotating the food products as they are conveyed through the unit to increase convective heat transfer within individual packages. In one aspect, the food products can be vibrated and/or rotated as they are conveyed through a stationary unit. In another aspect, the food products can be vibrated and/or rotated by vibrating and/or rotating one or more of the microwave chambers through which the food products are conveyed. The technical approach is to systemically connect all aspects of convection, conduction and radiation to create an efficient sterilization system;
- Offsetting microwave horn alignment of the plurality of microwave application zones to achieve better microwave field uniformity and product temperature uniformity as compared to conveying the food product straight through. For example, the horns may be offset and/or staggered to mitigate hot/cold spots, as well as to move the cold spot away from the geometric center of the product, which is also the conduction cold spot. This may also improve consistency of heating within a carrier (from package to package) as well as within a package;
- Designing the carrier for the food product packages to influence and/or control the location of the cold spot during the microwaving process;
- Alternating the orientation of the horns (or tray direction) to achieve better microwave field uniformity and product temperature uniformity as compared to progressing straight through. For example, the conveyor could move the tray through a series of right turns to change orientation of the carrier/packages to the microwave field versus progressing straight through; and
- Considering other conveyance designs, up and down sections, spirals, and right turns to achieve similar effects.

Other microwave retort parameters may also be varied to improve product quality after retort. For example, microwave intensity, retort belt-speed, and/or number of microwave applications can affect the quality of the food product and can be adjusted as needed to provide desired food product quality.

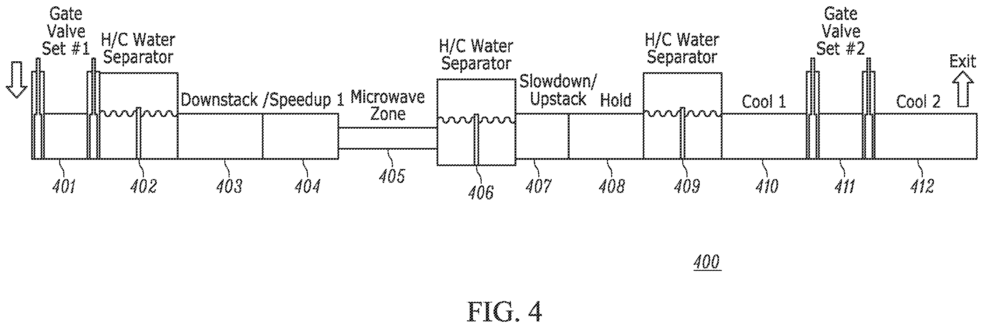

By one exemplary approach, FIG. 4 includes a schematic of a microwave retort sterilization system in accordance with the present disclosure. In one aspect, the microwave retort system comprises a plurality of individual chambers through which the food products are conveyed. In some approaches, the microwave retort system can be provided in modular form for flexibility in design, maintenance, and modification. For example, the chambers may include ASME pressure vessels. In one approach, the chambers are cylindrical vessels except for the microwave chambers and hot/cold water separators.

A gate valve set 401 is provided at a first end of the system followed by a pre-heating zone 402, which may include a hot/cold water separator. Here the product is immersed in a liquid medium and heated to a desired temperature in accordance with step 101 of FIG. 1. In one aspect, the liquid medium used in the pre-heating step may be at a temperature of about 50°C to about 85°C, and the pre-heating step may be carried out for a period of time effective to provide a uniform temperature in the food product of about 50 to about 80°C.

Generally, for at least certain portions of the process, the food products are provided in a stacked orientation to maximize the number of products that can be treated by the retort system in a given time period. After the pre-heating step, stacked food products are conveyed to an unstacking zone 403, where the food products may be unstacked prior to being conveyed into the microwave zone 405. In some approaches, a single layer of food product packages may be desirable. In other approaches, particularly where thinner packages are used, food product packages may remain in stacks of two to three packages. Multiple rows of packages may also be conveyed through the system, such as two or more rows of packages moving through the machine. The food products are then conveyed to a speedup zone 304. In some approaches, the speedup zone comprises a conveyor that moves at a faster rate than the conveyor that moved the food products through the microwave zone. In some approaches, unstacking zone 403 and speedup zone 404 may be the same or separate chambers.

The food products then move to microwave zone 405. Microwave zone 405 may include one, two, or a plurality of individual microwave temperature sections. For example, 1 to about 10 microwave temperature sections may be used, although more temperature sections may be desirable for a particular application where, for example, incrementally increasing the temperature of the liquid medium may be desired. In one aspect, when a plurality of microwave chambers is used, one or more of the plurality of chambers is configured to provide different microwave energy to the food products. In one approach, the microwave application points or wave guides may be configured as described in U.S. Patent No. 7,119,313, which is incorporated by reference herein in its entirety.

After microwaving, the food products are next conveyed to hot/cold water separator 406 on the way to holding zone 408. The positioning of hot/cold water separator 406 is unique to microwave retort systems. The separator 406 advantageously keeps the water of the microwave zone separate from the water of the holding zone 408, which may be at a much higher temperature than the water of the microwave zone. Such a hot/cold water separator 406 enables the retort system to be utilized in a continuous or semi-continuous process. Here, at least in some approaches, the food products may be transferred from the liquid medium temperatures of the microwave zone 405 to the sterilization temperatures of holding zone 408. The food products will also pass through slowdown/upstack zone 407 where the food products can be provided in a stacked configuration prior to the holding zone 408. At holding zone 408, the food products will be maintained at sterilization temperatures for the amount of time necessary to achieve a F₀ of 3 to 8, in another aspect of 4 to 8, as described above in reference to FIGS. 1 and 3.

The food products next pass to hot/cold water separator 409 before entering cooling zone 410, where the food products are cooled to about 80°C or less. At least in some approaches, zones 401 through 411 may include pressurized vessels. The food products then pass through gate valve set 411 where the pressure can be relieved before entering cooling zone 412 for further cooling at ambient pressure. The products may then exit the system for further processing or packaging.

By way of example, food products that may be treated by microwave retort in accordance with the present disclosure include shelf-stable meals, ready-to-heat meals, and ready-to-eat meals. Such meals may include, for example, pasta, pasta and sauce, macaroni and cheese, meat, meat and sauce, meat with broth, rice dishes, egg dishes, omelets, skillet meals, potatoes (e.g., mashed, sliced, and/or diced), soup, fruit, fish, and beverages. Products may also include pet food products.

In addition to the processing conditions mentioned above, formulation considerations may also improve the quality of the products treated by these retort systems and processes. By one approach, it was found that controlling viscosity of the food product can significantly improve the quality of the food product after microwave retort. In one aspect, the food product may be formulated to have a reduced viscosity. Generally, higher product viscosity reduces the rate of heat transfer by convection. To accommodate reduced heat transfer, lower microwave energy input may be required to avoid significantly degrading the quality of the product surface, such as by scorching. Therefore, determining an appropriate viscosity of the product which maximizes heat transfer while still providing desired organoleptic properties to the product can be particularly advantageous.

Ingredient selection can play an important role in viscosity management, particularly when formulating a product that will encounter the high temperatures of a microwave retort process. As is known in the art, certain ingredients increase the viscosity of a product, such as polysaccharide-based thickening agents, proteins, and gelling agents. However, many ingredients behave differently at high temperature. For example, certain starches or hydrocolloids may lose their thickening ability at high temperature while others, such as xanthan gum, have a stable viscosity at high temperature. Therefore, at least in some approaches, the food product formulation may include one or more ingredients which provide a desirably lower viscosity at high temperature during the heating process but a desirable higher viscosity at storage or consumption temperatures.

By another approach, controlling the dielectric properties of the food product can significantly improve the quality of food products produced by microwave retort. High dielectric loss results in reduced depth of penetration of microwave energy and in heating being concentrated at the surface of the food. High dielectric loss can result in surface browning and/or cooked or off flavor notes, even as the center of the product fails to achieve sterilization temperature. Dielectric loss can be reduced by, for example, reducing the salt concentration of the food product. However, if dielectric loss is reduced too far, the conversion of microwave energy into product heating may be reduced to the point where it is not useful for heating the food. Therefore, reduction of the dielectric loss can be managed to provide desired heating and quality characteristics in the final product.

By another approach, controlling the specific heat capacity of the food product can also contribute to improved quality after microwave retort. A low specific heat capacity can result in a higher temperature increase for a given amount of energy input. A low specific heat capacity may require a reduced rate of microwave energy input to avoid degrading the quality of the product surface, such as by overcooking, scorching, or production of undesirable flavor notes at the product surface. In one aspect, the heat capacity of the product can be adjusted by inclusion of certain ingredients or adjusting the amounts of certain ingredients. For example, the specific heat capacity can be reduced by increasing the proportion of fat relative to water in the product.

Other properties or physical characteristics of the food product may also be adjusted to provide improved product quality after microwave retort by affecting the rate of heat transfer through the product and/or the rate of conversion of microwave energy into heat. These properties and characteristics include, for example, mass, density, thermal conductivity, and dimensions. For example, increasing the mass of the product typically will require more total heat input for a given temperature rise in the product. Increasing the mass will also magnify temperature differences between hot and cold spots during heating. Increasing thermal conductivity may improve uniformity of heating, while increasing product dimensions generally will make uniformity of heating worse.

Statistical experimental designs can be used to efficiently explore multi-factorial systems to identify factors having the greatest effect on the desired response (e.g., product quality) and to find optimum combinations of factors that maximize the desired response and/or find the best compromise between desired outcome and undesirable inputs. For example, optimal combinations of quality and processing cost, or quality and equipment capital cost can be identified. By one approach, a central composite design or other appropriate statistical design can be run to find a combination of dielectric properties, viscosity, and/or other physical properties or characteristics that give the best product on microwave retort systems, such as but not limited to the MATS-B or MATS-150 from 915 Labs or retort system disclosed in U.S. Patent No. 7,119,313.

Advantages and embodiments of the microwave retort processes and formulations described herein are further illustrated by the following examples; however, the particular conditions, processing schemes, materials, and amounts recited in these examples, as well as other conditions and details, should not be construed to unduly limit the compositions, systems, and processes described herein. All percentages in this application are by weight unless otherwise indicated.

### Examples

### Example 1

In one aspect, a Microwave Assisted Thermal Sterilization ("MATS") production unit from 915 Labs LLC may be used. In one approach, the following specifications may be used:

**Table I: Retort Specifications**

| | |
|---|---|
| Product | 8 oz. pouch/tray |
| Carrier Size | 76 cm x 91 cm x 8 cm |
| Carrier Capacity | 24 pouches/ trays (6x4) |
| Throughput | ~150 pouches/min. (~6 carrier/min) |
| Vessel Rating | 149°C, 6 bar |
| Operating Temp | 125°C |
| Operating Pressure | 3 bar |
| Machine Envelope | 20m x 8m x 5m |

### Example 2

Suitable packaging for use in the microwave retort processes described herein includes, for example, the packaging from Printpack having the following characteristics:
**Dimension:** 6" x 7.25" (height) x 1.5" Gusset
Front/Back: Non-foil retort pouch
   - Barrier coated PET film (48ga)/Ink/ White Retort PET(92ga)/Retort Grade BON(0.6mil)/Retort PP Sealant(2.8mil), lower staining
   - OTR: 0.03cc/(100in²*24hr) at 23°C/0% RH
   - MVTR: 0.015g/(100in²*24hr) at 38°C/90% RH
   - Thickness: 5.1mil
Gusset: Non-foil retort pouch (3 ply clear)
   - Barrier coated PET Film (48ga)/Ink/Adhesive/Retort Grade
   - BON(0.6mil)/ Adhesive/Retort PP Sealant(3.0mil), lower staining
   - OTR: 0.03cc/(100in²*24hr) at 23°C/0% RH
   - MVTR: 0.015g/(100in²*24hr) at 38°C/90% RH
   - Thickness: 4.2mil
Recommended heat seal setting: 380°F, 40psi, 2s dwell time

Full vacuum, no gas flush was used. Heating from one side only (from top) using impulse sealer.

Trial Summary. Pouches were evaluated with different vacuum setting & dwell time to identify the optimum settings.

Vacuum setting were identified: pasta with sauce = 4, pasta only = 10. Target seal time was 3-4 seconds.

As the Multivac would not stop automatically at set time, stop watch was used to set at 4 sec.

No packaging failures (bursting/tearing) were observed during the trial run. Carrier plate had 3 slots for 3 packages. Dimensions of the carrier plate: 73/6" (L) x 5 3/16" (W) x ¾" thick. Pouch should be designed to hold up to 60 psi, and temperature of up to 140°C using MMT's unit. For production unit, MATS 150 - up to 90 psi.

### Example 3

Macaroni and cheese products (pasta in cheese sauce) were prepared using Barilla elbow pasta (made with semolina and durum wheat flour) and the cheese sauce formulas provided below.

**Table II: Cheese Sauces**

| **Ingredients** | **Sauce I (% by wt.)** | **Sauce I + Salt (% by wt.)** | **Sauce I + Cream (% by wt.)** |
|---|---|---|---|
| Xanthan gum | 0.2 | 0.2 | 0.2 |
| Flour | 1.25 | 1.25 | 1.25 |
| Corn starch | 1.25 | 1.25 | 1.25 |
| Cream | 5.0 | 5.0 | 11.6 |
| Water | 68.6 | 68.6 | 68.6 |
| Milk | 5.0 | 5.0 | 5.0 |
| Kraft Singles slices | 0.7 | 0.7 | 0.7 |
| Salt | - | 1.0 | - |
| Shredded sharp cheddar cheese | 18.0 | 18.0 | 18.0 |
| **Total** | **100.0** | **101.0** | **106.6** |

The "Sauce I + Salt" sample was made by adding 1 percent salt (NaCl) to the "Sauce 1" sample, and the "Sauce I + Cream" sample was made by adding 6.6 percent store-bought cream to the "Sauce I" sample. No formula adjustments were made to compensate for addition of the salt or cream (therefore, the percentages in Table II provide a total above 100%).

The sauces were combined with pasta according to the following formulations:

**Table III: Macaroni and Cheese Products**

| **Sauce** | **Grams/ Pouch** | **Sauce/ Pasta (g)** | **Cheese sauce (g/pouch)** | **Pasta pre-hydration** | **Water (g)** |
|---|---|---|---|---|---|
| Sauce I | 298 | 213/85 | 178 | 50% | 35 |
| Sauce I + Salt | 298 | 213/85 | 178 | 50% | 35 |
| Sauce I + Cream | 298 | 213/85 | 178 | 50% | 35 |

The pasta was partially cooked in water before mixing the partially cooked pasta with the cheese sauce.

The pasta and cheese sauces were run through the microwave retort machine using the retort process conditions shown in Table IV below. The same water temperature was used for each pass in the microwave zone. The "MW Energy" column indicates the number of passes at each microwave power.

**Table IV: Retort Processing Conditions**

| **Sample** | **Starting Product Temp (°C)** | **Loading Water Temp (°C)** | **Water Temp in Microwave Zone (°C)** | **MW Off Cycles Before MW Passes** | **Overpressure (psi)** | | **MW Energy (kW) and passes** | |
|---|---|---|---|---|---|---|---|---|
| Sauce I Product | | | | | | | 30 kW - 2 | |
| | | | | | | | 25 kW - 2 | |
| | 25 | 28.6 | 122 | 0 | 50.8 | | 20 kW - 3 | |
| Sauce I + Salt Product | | | | | | | 30 kW - 2 | |
| | | | | | | | 25 kW - 2 | |
| | 27 | 29 | 122.5 | 0 | - | | 20 kW - 2 | |
| Sauce I + Cream Product | 26 | - | - | 0 | - | | 35 kW - 3 | |
| | | | | | | | 25 kW - 2 | |
| | | | | | | | | |

| | **# Passes** | **Pause Time After MW Zone (sec)** | **MW Off Cycles After MW Passes** | **Cooling Water Temp (°C)** | | **Reflected Power Water to Reflected Power Product** | | |
|---|---|---|---|---|---|---|---|---|
| Sauce I Product | 7 | 30 | 7 | 30.2 | | - | | |
| Sauce I + Salt Product | 6 | 30 | 8 | 30.4 | | - | | |
| Sauce I + Cream Product | 5 | 60 | 5 | 31 | | 12.5 to 1.6 | | |

The standard deviations of the dielectric constant (ε') and dielectric loss factor (ε") of the products were measured at 915 MHz and 2450 MHz. The results are presented in Tables V and VI below.

**Table V: Standard deviation of dielectric constant (ε') and dielectric loss factor (ε") at 915 MHz**

| Sample | At 915 MHz | | | | |
|---|---|---|---|---|---|
| | ε' | Std Dev | ε" | Std Dev | Penetration Depth (m) |
| Sauce I | 5.75E+01 | 3.431586 | 1.88E+01 | 1.14631 | 2.14E-02 |
| Sauce I + Salt | 6.35E+01 | 0.06577 | 5.39E+01 | 0.18388 | 8.29E-03 |
| Sauce I + Cream | 6.14E+01 | 0.568242 | 2.19E+01 | 0.176606 | 1.89E-02 |

**Table VI: Standard deviation of dielectric constant (ε') and dielectric loss factor (ε") at 2450 MHz**

| Sample | At 2450 MHz | | | | |
|---|---|---|---|---|---|
| | ε' | Std Dev | ε" | Std Dev | Penetration Depth (m) |
| Sauce I | 5.49E+01 | 3.374423 | 1.43E+01 | 0.873513 | 1.84E-03 |
| Sauce I + Salt | 6.01 E+01 | 0.08633 | 2.82E+01 | 0.054793 | 1.70E-03 |
| Sauce I + Cream | 5.87E+01 | 0.537738 | 1.58E+01 | 0.225955 | 1.77E-03 |

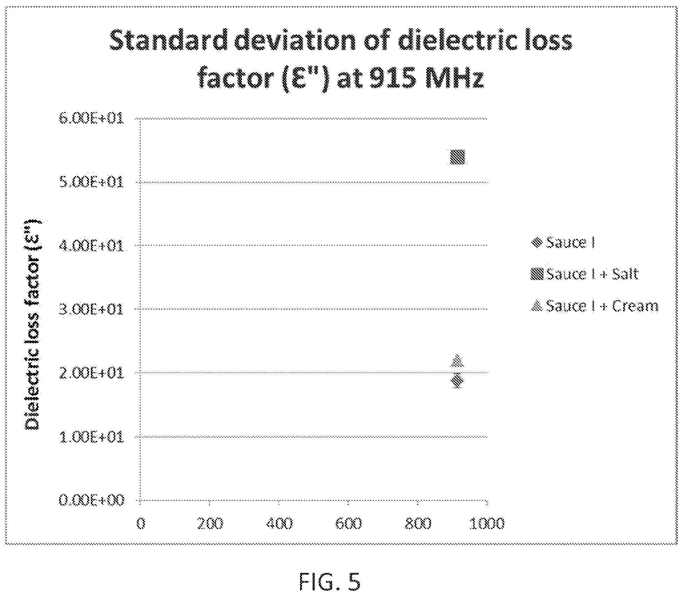

The results for standard deviation of dielectric loss factor (ε") results at 915 MHz are also presented in FIG. 5. There it can be seen that the dielectric loss of Sauce I changed significantly with the addition of 1% salt. Very little change in dielectric loss was seen with the addition of cream to Sauce I.

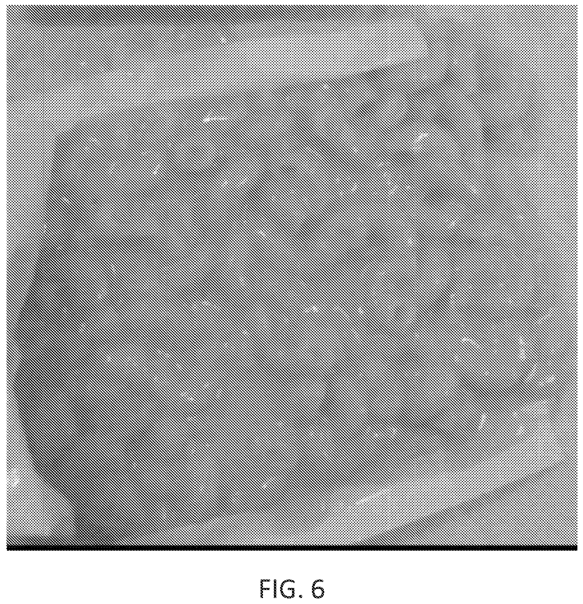

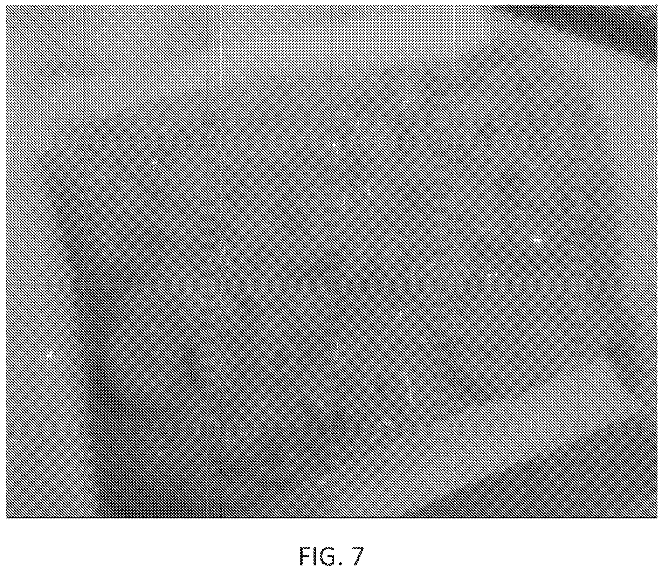

Photographs of the three microwave retort products are provided in FIGS. 6-8. Generally, it was seen that having a higher salt content yields a higher loss factor, which decreases depth of penetration and can increase scorching on the surface of the food product. The macaroni and cheese product of FIG. 7 (Sauce I plus 1% salt) has a darker color than the other two products, and has some browning in the corners. Generally, the macaroni and cheese product of FIG. 6 (Sauce I) has a more milky, creamy appearance.

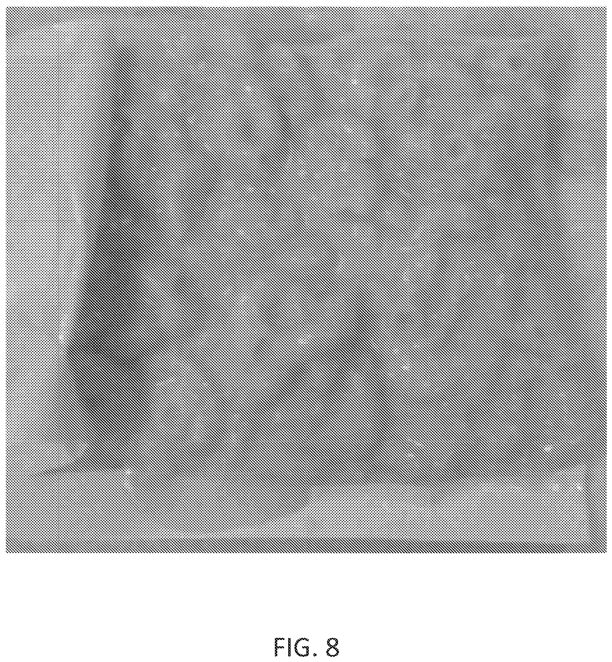

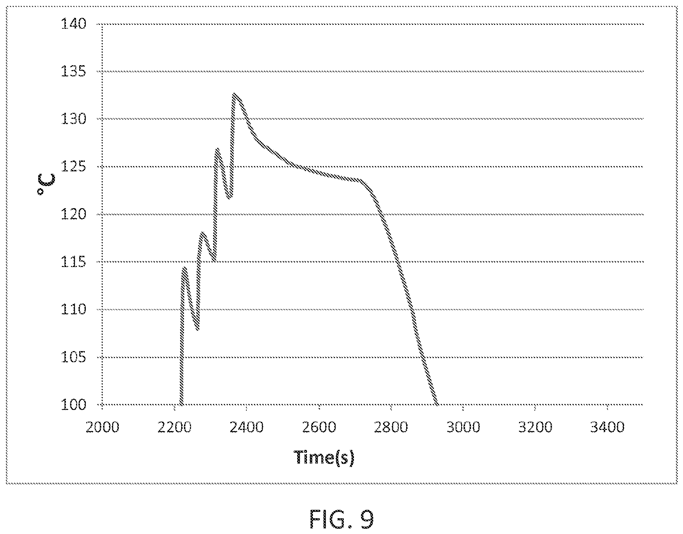

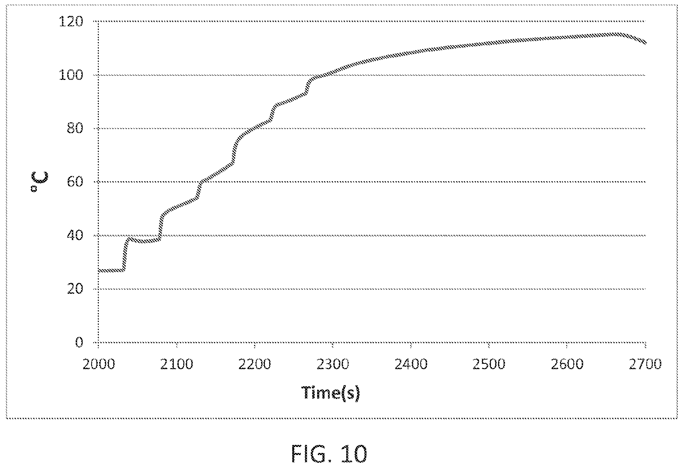

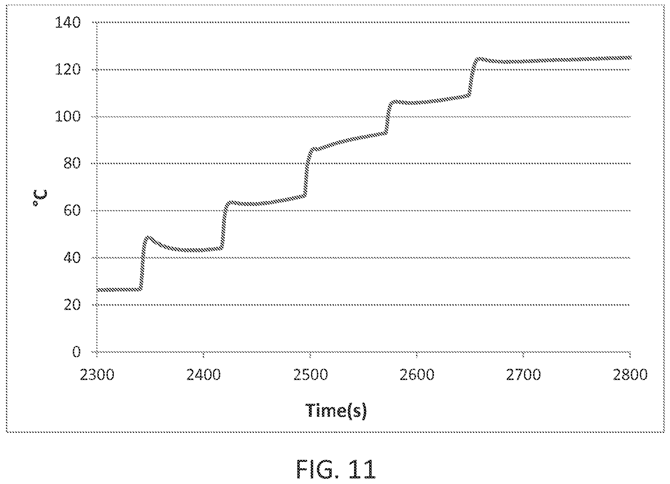

The temperature of the cold spot of the product was also plotted over time during the microwave retort process. Those results are shown in FIG. 9 (Sauce I), FIG. 10 (Sauce I + Salt), and FIG. 11 (Sauce I + Cream), with the Y-axis being core temperature (in °C) and the X-axis being time (s). It can be seen that the core of Sauce I (FIG. 8) heated rapidly, indicating deep penetration of the microwave energy. The core of the other products heated more slowly.

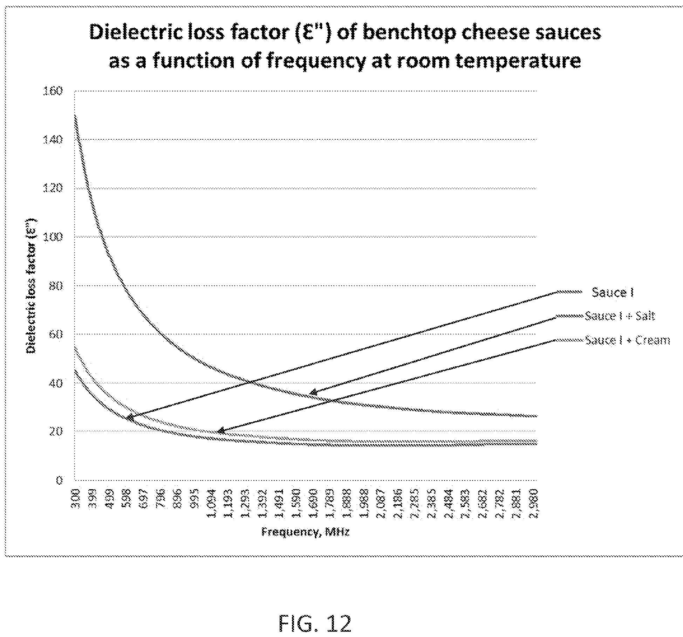

FIG. 12 is a graph of the dielectric loss factor (ε") of cheese sauces as a function of frequency at room temperature. FIG. 12 demonstrates that the dielectric loss factors of each of the macaroni and cheese products do not change dramatically relative to each other throughout the frequency range.

### Example 4

Macaroni and cheese products were prepared. One set of products was diluted by approximately 25-35 percent with water and had lower viscosity than the non-diluted products.

The products were retorted using the process parameters shown below in Table VII. The chain speed of 1.7 in/sec was reduced from 3.3 in/sec and the 10 kW per microwave horn was reduced from 30 kW. The slower speed allowed for application of reduced microwave energy over a longer period of time.

**Table VII: Microwave Retort Process Parameters**

| | | | | | Number of Microwave Horns, with 10 kW Applied at Each Horn | | | | | | | | | | |
|---|---|---|---|---|---|---|---|---|---|---|---|---|---|---|---|
| **Product** | **Water Temp PreHeat (°C)** | | **Pre-Heating (min)** | | **1** | **2** | **3** | **4** | | **5** | **6** | **7** | **8** | **9** | **10** |
| Macaroni and cheese | 51.5 | | 17 | | 10 | 10 | 10 | 10 | | 10 | 10 | 10 | 10 | 10 | 10 |
| Reduced viscosity macaroni and cheese | 50.4 | | 17 | | 10 | 10 | 10 | 10 | | 10 | 10 | 10 | 10 | 10 | 10 |
| | | | | | | | | | | | | | | | |

| **Product** | | **Hold Time setpoint (min:sec)** | | **Chain Speed Setpoint (in/sec)** | | | | | **Pressure (psi)** | | **Min F₀** | | | | |
|---|---|---|---|---|---|---|---|---|---|---|---|---|---|---|---|
| Macaroni and cheese | | 6:10 | | 1.7 | | | | | 53 | | 14.25 | | | | |
| Reduced viscosity macaroni and cheese | | 6:10 | | 1.7 | | | | | 53 | | 15.71 | | | | |

"Min F₀" indicates the F₀ reached for the coldest spot of the samples tested. As can be seen above, the reduced viscosity product resulted in a higher Min F₀ value.

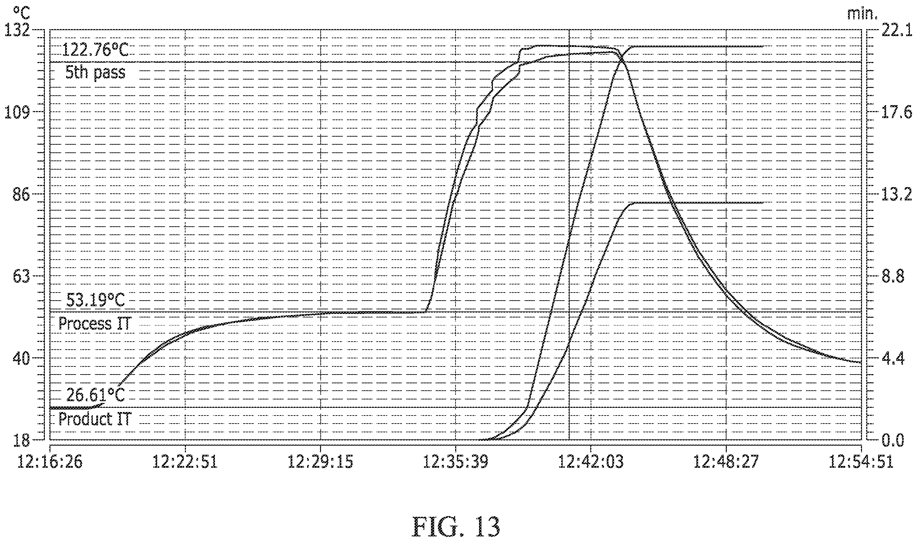

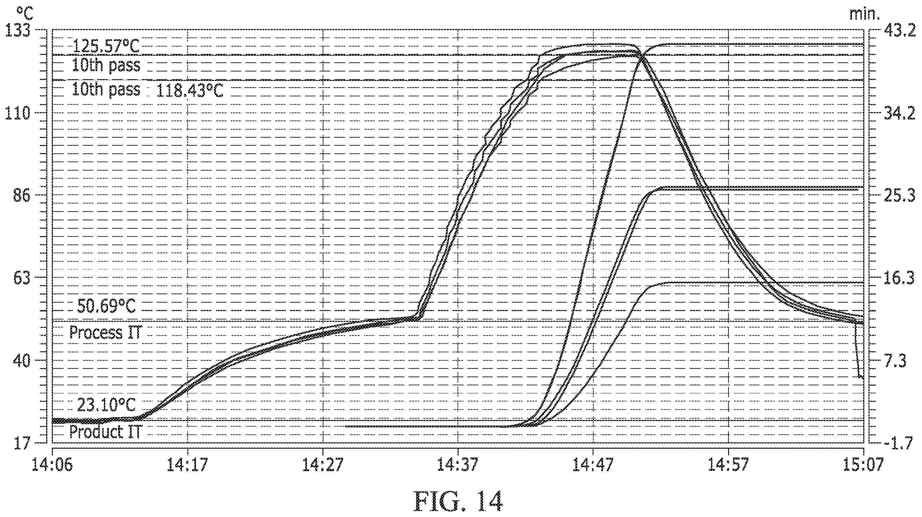

FIG. 13 includes a graph of the cumulative F₀ and the temperature of the cold spot of the reduced viscosity sample (n=2; two pouches of product) after ten microwave passes. FIG. 14 includes a graph of the cumulative F₀ and the temperature of the cold spot of the original (non-reduced) viscosity sample (n=4; four pouches of product) after ten microwave passes. "Process IT" indicates the initial temperature of the process (e.g., the temperature of the pre-heating zone). The plotted lines beginning on the left side of the figures indicate the temperature of the cold spot, while the plotted lines beginning towards the center of the figures indicate the cumulative F₀.

### Example 5

Macaroni and cheese products were prepared using egg white pasta. Pasta and sauce were included in relative amounts of 70 percent sauce and 30 percent blanched pasta. The cheese sauces were prepared according to the formulations in Table VIII below.

**Table VIII: Cheese Sauces**

| **Ingredients** | **Sauce A (% by wt.)** | **Sauce B (% by wt.)** | **Sauce C (% by wt.)** |
|---|---|---|---|
| Disodium phosphate duohydrate | 1.5 | 1.5 | 1.5 |
| Cheese | 35.2 | 30.0 | 30.0 |
| Xanthan gum | 0.15 | 0.200 | 0.08 |
| Modified starch (Rezista) | 1.35 | 1.55 | 1.25 |
| Canola oil | 1.0 | 1.0 | 1.0 |
| Water | 57.76 | 62.27 | 48.13 |
| Cheese flavor | 3.0 | 3.44 | 3.0 |
| Coloring | 0.04 | 0.04 | 0.04 |
| Skim milk concentrate | - | - | 15.0 |
| **Total** | **100.0** | **101.0** | **106.6** |

Sauce A included a higher amount of cheese than Sauce B. Sauce C differed from Sauces A and B by the inclusion of skim milk concentrate. Sauce C containing skim milk concentrate was perceived to have enhanced creaminess in blind team tastings.

As generally used herein, the articles "one," "a," "an," and "the" refer to "at least one" or "one or more," unless otherwise indicated. As generally used herein, the terms "including" and "having" mean "comprising." As generally used herein, the term "about" refers to an acceptable degree of error for the quantity measured, given the nature or precision of the measurement. Typical exemplary degrees of error may be within 20%, within 10%, or within 5% of a given value or range of values.

All numerical quantities stated herein are to be understood as being modified in all instances by the term "about" unless otherwise indicated. The numerical quantities disclosed herein are approximate and each numerical value is intended to mean both the recited value and a functionally equivalent range surrounding that value. At the very least, and not as an attempt to limit the application of the doctrine of equivalents to the scope of the claims, each numerical value should at least be construed in light of the number of reported significant digits and by applying ordinary rounding techniques. Notwithstanding the approximations of numerical quantities stated herein, the numerical quantities described in specific examples of actual measured values are reported as precisely as possible.

All numerical ranges stated herein include all sub-ranges subsumed therein. For example, ranges of "1 to 10" and "between 1 and 10" are intended to include all sub-ranges between and including the recited minimum value of 1 and the recited maximum value of 10.

All percentages and ratios are calculated by weight unless otherwise indicated. All percentages and ratios are calculated based on the total weight of the compound or composition unless otherwise indicated.

In the above description, certain details are set forth to provide a thorough understanding of various non-limiting embodiments of the compositions and methods described herein. One of ordinary skill in the art will understand that the non-limiting embodiments described herein may be practiced without these details. In other instances, well-known structures and methods associated with the compositions and methods may not be shown or described in detail to avoid unnecessarily obscuring descriptions of the non-limiting embodiments described herein.

## Claims

1. A process for pasteurizing or sterilizing a packaged food product using microwave energy, the method comprising
preheating a packaged food product to a temperature of 50°C to 80°C;
conveying the packaged food product to a microwave zone comprising a first microwave temperature section and a second microwave temperature section;
in the first microwave temperature section, immersing the packaged food product in a first liquid medium provided to the first microwave temperature section at a first temperature and applying microwave energy to the food product for a first period of time while the food product is at least partially submerged in the first liquid medium, the first temperature being at least 20°C and less than the pasteurization temperature when pasteurizing the packaged food product or less than the sterilization temperature when sterilizing the packaged food product;
conveying the packaged food product from the first microwave temperature section to the second microwave temperature section, wherein a second liquid medium is separately provided to the second microwave temperature section at a second temperature that is higher than the first temperature but not exceeding the pasteurization temperature when pasteurizing the packaged food product or the sterilization temperature when sterilizing the packaged food product, and applying microwave energy to the food product for a second period of time while the food product is at least partially submerged in the first liquid medium;
conveying the packaged food product having microwave energy applied for at least a first and second period of time to a holding zone, the holding zone including a holding zone liquid medium at a temperature sufficient to pasteurize the packaged food product or sterilize the packaged food product; and
conveying the packaged food product from the holding zone to a cooling zone.

2. The process according to claim 1, wherein the process further comprises:
conveying the packaged food product to a third microwave temperature section and applying microwave energy to the food product for a third period of time, wherein:
a third liquid medium is provided to the third microwave temperature section:
the second liquid medium is less than the pasteurization temperature when pasteurizing the packaged food product or the sterilization temperature when sterilizing the packaged food product, and
the third liquid medium has a higher temperature than the second liquid medium and
applying microwave energy to the food product for a third period of time while the food product is at least partially submerged in the third liquid medium.

3. The process according to claim 1 or claim 2, wherein the process further comprises conveying the packaged food product to a plurality of additional microwave temperature sections after the second microwave temperature section.

4. The process according to any one of claims 1 to 3, wherein the microwave energy applied in the first microwave temperature section has a higher intensity than the microwave energy applied in the second microwave temperature section.

5. The process according to any one of claims 2 to 4, wherein the microwave energy applied in the first microwave temperature section has a higher intensity than the microwave energy applied in the second microwave section and plurality of additional microwave temperature sections.

6. The process according to any one of claims 1 to 5, wherein the packaged food product is selected from the group consisting of pasta, pasta and sauce, macaroni and cheese, meat, meat and sauce, meat with broth, rice dishes, egg dishes, omelets, skillet meals, mashed potatoes, sliced potatoes, diced potatoes, soup, fruit, fish, and beverages.

7. The process according to any one of claims 1 to 6, wherein the packaged food product is macaroni and cheese.

8. The process according to any one of claims 1 to 7, wherein the packaged food product includes a pouch, rigid container, or flexible container.

9. The process according to any one of claims 1 to 8, wherein the first liquid medium and the second liquid medium have a temperature of 20 to 95°C during application of the microwave energy.

10. The process according to any one of claims 1 to 9, wherein each process step is conducted to avoid any portion of the food product from reaching a temperature of greater than 135°C.

11. A microwave retort system comprising:
a preheating zone configured to heat a liquid medium in the preheating zone to a temperature of 50°C to 80°C;
a microwave zone including:
at least one microwave source;
at least two microwave applicators configured to direct microwave energy from the microwave source to a packaged food product positioned in the microwave zone;
a first microwave temperature section in the microwave zone, the first microwave temperature section configured to immerse the packaged food product in a first liquid medium within the first microwave temperature section, to apply microwave energy to the packaged food product when immersed, and to heat the liquid medium within the first microwave temperature section to a first temperature less than the pasteurization temperature when pasteurizing the packaged food product or less than the sterilization temperature when sterilizing the packaged food product; and
a second microwave temperature section in the microwave zone downstream of the first microwave temperature section, the second microwave temperature section configured to immerse the packaged food product in a liquid medium within the second microwave temperature section, to apply microwave energy to the packaged food product when immersed, and to heat the liquid medium within the second microwave temperature section to a second temperature greater than the first temperature but not exceeding the pasteurization temperature when pasteurizing the packaged food product or the sterilization temperature when sterilizing the packaged food product; and
a conveying device configured to move the packaged food product from the preheating zone to the microwave zone.

12. The microwave retort system of claim 11, wherein the microwave zone includes at least three microwave temperature sections.

13. The microwave retort system of claim 11, wherein the microwave zone includes a plurality of microwave temperature sections including the first microwave temperature section and the second microwave temperature section, the plurality of microwave temperature sections further including 3 to 10 additional microwave temperature sections.

14. The microwave retort system of claim 11, further comprising a holding zone downstream of the microwave zone configured to maintain the packaged food product at a desired sterilization or pasteurization temperature.

15. The microwave retort system of claim 14, further comprising a hot/cold water separator between the microwave zone and the holding zone.

## Patentansprüche

1. Verfahren zur Pasteurisierung oder Sterilisierung eines verpackten Lebensmittelprodukts unter Verwendung von Mikrowellenenergie, wobei das Verfahren umfasst:
Vorwärmen eines verpackten Lebensmittelprodukts auf eine Temperatur von 50 °C bis 80 °C;
Fördern des verpackten Lebensmittelprodukts in eine Mikrowellenzone, umfassend einen ersten Mikrowellentemperaturabschnitt und einen zweiten Mikrowellentemperaturabschnitt;
in dem ersten Mikrowellentemperaturabschnitt Eintauchen des verpackten Lebensmittelprodukts in ein erstes flüssiges Medium, das dem ersten Mikrowellentemperaturabschnitt bei einer ersten Temperatur bereitgestellt wird, und Anwenden von Mikrowellenenergie auf das Lebensmittelprodukt für einen ersten Zeitraum, während das Lebensmittelprodukt zumindest zum Teil in das erste flüssige Medium eingetaucht ist, wobei die erste Temperatur mindestens 20 °C und kleiner als die Pasteurisierungstemperatur ist, wenn das verpackte Lebensmittelprodukt pasteurisiert wird, oder kleiner als die Sterilisierungstemperatur ist, wenn das verpackte Lebensmittelprodukt sterilisiert wird;
Fördern des verpackten Lebensmittelprodukts von dem ersten Mikrowellentemperaturabschnitt zu dem zweiten Mikrowellentemperaturabschnitt, wobei ein zweites flüssiges Medium separat dem zweiten Mikrowellentemperaturabschnitt bei einer zweiten Temperatur bereitgestellt wird, die höher als die erste Temperatur ist, jedoch nicht die Pasteurisierungstemperatur überschreitet, wenn das verpackte Lebensmittelprodukt pasteurisiert wird, oder nicht die Sterilisierungstemperatur überschreitet, wenn das verpackte Lebensmittelprodukt sterilisiert wird, und Anwenden von Mikrowellenenergie auf das Lebensmittelprodukt für einen zweiten Zeitraum, während das Lebensmittelprodukt zumindest zum Teil in das erste flüssige Medium eingetaucht ist;
Fördern des verpackten Lebensmittelprodukts mit für mindestens einen ersten und einen zweiten Zeitraum angewendete Mikrowellenenergie zu einer Haltezone, wobei die Haltezone ein flüssiges Haltezonenmedium bei einer Temperatur einschließt, die dazu ausreicht, das verpackte Lebensmittelprodukt zu pasteurisieren oder das verpackte Lebensmittelprodukt zu sterilisieren; und
Fördern des verpackten Lebensmittelprodukts von der Haltezone zu einer Kühlzone.

2. Verfahren nach Anspruch 1, wobei das Verfahren ferner umfasst:
Fördern des verpackten Lebensmittelprodukts zu einem dritten Mikrowellentemperaturabschnitt und Anwenden von Mikrowellenenergie auf das Lebensmittelprodukt für einen dritten Zeitraum, wobei:
ein drittes flüssiges Medium dem dritten Mikrowellentemperaturabschnitt bereitgestellt wird;
das zweite flüssige Medium kleiner als die Pasteurisierungstemperatur ist, wenn das verpackte Lebensmittelprodukt pasteurisiert wird, oder kleiner als die Sterilisierungstemperatur ist, wenn das verpackte Lebensmittelprodukt sterilisiert wird; und
das dritte flüssige Medium eine höhere Temperatur als das zweite flüssige Medium aufweist; und
Anwenden von Mikrowellenenergie auf das Lebensmittelprodukt für einen dritten Zeitraum, während das Lebensmittelprodukt zumindest zum Teil in das dritte flüssige Medium eingetaucht ist.

3. Verfahren nach Anspruch 1 oder Anspruch 2, wobei das Verfahren ferner ein Fördern des verpackten Lebensmittelprodukts zu einer Vielzahl von zusätzlichen Mikrowellentemperaturabschnitten nach dem zweiten Mikrowellentemperaturabschnitt umfasst.

4. Verfahren nach einem der Ansprüche 1 bis 3, wobei die Mikrowellenenergie, die in dem ersten Mikrowellentemperaturabschnitt angewendet wird, eine höhere Intensität hat als die Mikrowellenenergie, die in dem zweiten Mikrowellentemperaturabschnitt angewendet wird.

5. Verfahren nach einem der Ansprüche 2 bis 4, wobei die Mikrowellenenergie, die in dem ersten Mikrowellentemperaturabschnitt angewendet wird, eine höhere Intensität hat als die Mikrowellenenergie, die in dem zweiten Mikrowellentemperaturabschnitt und der Vielzahl von zusätzlichen Mikrowellentemperaturabschnitten angewendet wird.

6. Verfahren nach einem der Ansprüche 1 bis 5, wobei das verpackte Lebensmittelprodukt aus der Gruppe bestehend aus Pasta, Pasta mit Soße, Makkaroni mit Käse, Fleisch, Fleisch mit Soße, Fleisch mit Brühe, Reisgerichten, Eiergerichten, Omeletts, Pfannengerichten, Kartoffelbrei, Kartoffelscheiben, Kartoffelwürfeln, Suppe, Obst, Fisch und Getränken ausgewählt ist.

7. Verfahren nach einem der Ansprüche 1 bis 6, wobei das verpackte Lebensmittelprodukt Makkaroni mit Käse ist.

8. Verfahren nach einem der Ansprüche 1 bis 7, wobei das verpackte Lebensmittelprodukt einen Beutel, starren Behälter oder flexiblen Behälter einschließt.

9. Verfahren nach einem der Ansprüche 1 bis 8, wobei das erste flüssige Medium und das zweite flüssige Medium während der Anwendung der Mikrowellenenergie eine Temperatur von 20 bis 95 °C aufweisen.

10. Verfahren nach einem der Ansprüche 1 bis 9, wobei jeder Prozessschritt durchgeführt wird, um zu vermeiden, dass jedweder Teil des Lebensmittelprodukts eine Temperatur von mehr als 135 °C erreicht.

11. Mikrowellenretortensystem, umfassend:
eine Vorwärmzone, die dazu konfiguriert ist, ein flüssiges Medium in der Vorheizzone auf eine Temperatur von 50 °C bis 80 °C zu erhitzen;
eine Mikrowelle, einschließend:
mindestens eine Mikrowellenquelle;
mindestens zwei Mikrowellenapplikatoren, die dazu konfiguriert sind, Mikrowellenenergie von der Mikrowellenquelle zu einem verpackten Lebensmittelprodukt, das in der Mikrowellenzone positioniert ist, zu leiten;
einen ersten Mikrowellentemperaturabschnitt in der Mikrowellenzone, wobei der erste Mikrowellentemperaturabschnitt dazu konfiguriert ist, das verpackte Lebensmittelprodukt in ein erstes flüssiges Medium innerhalb des ersten Mikrowellentemperaturabschnitts einzutauchen, Mikrowellenenergie auf das verpackte Lebensmittelprodukt, wenn es eingetaucht ist, anzuwenden und das flüssige Medium innerhalb des ersten Mikrowellentemperaturabschnitts auf eine erste Temperatur zu erhitzen, die kleiner als die Pasteurisierungstemperatur ist, wenn das verpackte Lebensmittelprodukt pasteurisiert wird, oder kleiner als die Sterilisierungstemperatur ist, wenn das verpackte Lebensmittelprodukt sterilisiert wird; und
einen zweiten Mikrowellentemperaturabschnitt in der Mikrowellenzone, der stromabwärts von dem ersten Mikrowellentemperaturabschnitt ist, wobei der zweite Mikrowellentemperaturabschnitt dazu konfiguriert ist, das verpackte Lebensmittelprodukt in ein flüssiges Medium innerhalb des zweiten Mikrowellentemperaturabschnitts einzutauchen, Mikrowellenenergie auf das verpackte Lebensmittelprodukt, wenn es eingetaucht ist, anzuwenden und das flüssige Medium innerhalb des zweiten Mikrowellentemperaturabschnitts auf eine zweite Temperatur zu erhitzen, die größer als die erste Temperatur ist Pasteurisierungstemperatur ist, jedoch nicht die Pasteurisierungstemperatur überschreitet, wenn das verpackte Lebensmittelprodukt pasteurisiert wird, oder nicht die Sterilisierungstemperatur überschreitet, wenn das verpackte Lebensmittelprodukt sterilisiert wird; und
eine Fördervorrichtung, die dazu konfiguriert ist, das verpackte Lebensmittelprodukt aus der Vorwärmzone in die Mikrowellenzone zu bewegen.

12. Mikrowellenretortensystem nach Anspruch 11, wobei die Mikrowellenzone mindestens drei Mikrowellentemperaturabschnitte einschließt.

13. Mikrowellenretortensystem nach Anspruch 11, wobei die Mikrowellenzone eine Vielzahl von Mikrowellentemperaturabschnitten einschließt, einschließlich des ersten Mikrowellentemperaturabschnitts und des zweiten Mikrowellentemperaturabschnitts, wobei die Vielzahl von Mikrowellentemperaturabschnitten ferner 3 bis 10 zusätzliche Mikrowellentemperaturabschnitte einschließt.

14. Mikrowellenretortensystem nach Anspruch 11, ferner umfassend eine Haltezone stromabwärts von der Mikrowellenzone, die dazu konfiguriert ist, das verpackte Lebensmittelprodukt auf einer gewünschten Sterilisierungs- oder Pasteurisierungstemperatur zu halten.

15. Mikrowellenretortensystem nach Anspruch 14, ferner umfassend einen Warm-/Kaltwasserabscheider zwischen der Mikrowellenzone und der Haltezone.

## Revendications

1. Un procédé de pasteurisation ou de stérilisation d'un produit alimentaire emballé en utilisant l'énergie micro-ondes, le procédé comprenant
préchauffer un produit alimentaire emballé à une température de 50 °C à 80 °C ;
acheminer le produit alimentaire emballé vers une zone micro-ondes comprenant une première section de température micro-ondes et une seconde section de température micro-ondes ;
dans la première section de température micro-ondes, immerger le produit alimentaire emballé dans un premier milieu liquide fourni à la première section de température micro-ondes à une première température et appliquer de l'énergie micro-ondes au produit alimentaire pendant une première période de temps pendant que le produit alimentaire est au moins partiellement immergé dans le premier milieu liquide, la première température étant d'au moins 20 °C et inférieure à la température de pasteurisation lors de la pasteurisation du produit alimentaire emballé ou inférieure à la température de stérilisation lors de la stérilisation du produit alimentaire emballé ;
acheminer le produit alimentaire emballé de la première section de température micro-ondes à la seconde section de température micro-ondes, dans lequel, un second milieu liquide étant fourni séparément à la seconde section de température micro-ondes à une seconde température qui est supérieure à la première température, mais ne dépassant pas la température de pasteurisation lors de la pasteurisation du produit alimentaire emballé ou la température de stérilisation lors de la stérilisation du produit alimentaire emballé, et appliquer de l'énergie micro-ondes au produit alimentaire pendant une seconde période de temps pendant que le produit alimentaire est au moins partiellement immergé dans le premier milieu liquide ;
acheminer le produit alimentaire emballé ayant une énergie micro-ondes appliquée pendant au moins une première et une seconde période de temps vers une zone de maintien, la zone de maintien comprenant un milieu liquide de zone de maintien à une température suffisante pour pasteuriser le produit alimentaire emballé ou stériliser le produit alimentaire emballé ; et
acheminer le produit alimentaire emballé de la zone de maintien vers une zone de refroidissement.

2. Le procédé selon la revendication 1, dans lequel le procédé comprend en outre :
acheminer le produit alimentaire emballé vers une troisième section de température micro-ondes et appliquer de l'énergie micro-ondes au produit alimentaire pendant une troisième période de temps, dans lequel :
un troisième milieu liquide est fourni à la troisième section de température micro-ondes :
le second milieu liquide est inférieur à la température de pasteurisation lors de la pasteurisation du produit alimentaire emballé ou à la température de stérilisation lors de la stérilisation du produit alimentaire emballé, et
le troisième milieu liquide a une température plus élevée que le second milieu liquide et
appliquer de l'énergie micro-onde au produit alimentaire pendant une troisième période de temps tandis que le produit alimentaire est au moins partiellement immergé dans le troisième milieu liquide.

3. Le procédé selon la revendication 1 ou la revendication 2, dans lequel le procédé comprend en outre l'acheminement du produit alimentaire emballé vers une pluralité de sections de température micro-ondes supplémentaires après la seconde section de température micro-ondes.

4. Le procédé selon l'une quelconque des revendications 1 à 3, dans lequel l'énergie micro-onde appliquée dans la première section de température micro-onde a une intensité supérieure à celle de l'énergie micro-onde appliquée dans la seconde section de température micro-onde.

5. Le procédé selon l'une quelconque des revendications 2 à 4, dans lequel l'énergie micro-onde appliquée dans la première section de température micro-onde a une intensité supérieure à celle de l'énergie micro-onde appliquée dans la seconde section de température micro-onde et dans une pluralité de sections de température micro-onde supplémentaires.

6. Le procédé selon l'une quelconque des revendications 1 à 5, dans lequel le produit alimentaire emballé est choisi dans le groupe constitué de pâtes, pâtes avec sauce, macaroni au fromage, viande, viande avec sauce, viande avec bouillon, plats à base de riz, plats à base d'œufs, omelettes, plats cuisinés à la poêle, purée de pommes de terre, pommes de terre en tranches, pommes de terre en dés, soupe, fruits, poisson et boissons.

7. Le procédé selon l'une quelconque des revendications 1 à 6, dans lequel le produit alimentaire emballé est du macaroni au fromage.

8. Le procédé selon l'une quelconque des revendications 1 à 7, dans lequel le produit alimentaire emballé comprend une poche, un récipient rigide ou un récipient flexible.

9. Procédé selon l'une quelconque des revendications 1 à 8, dans lequel le premier milieu liquide et le second milieu liquide ont une température de 20 °C à 95 °C lors de l'application de l'énergie micro-onde.

10. Le procédé selon l'une quelconque des revendications 1 à 9, dans lequel chaque étape du procédé est réalisée pour éviter qu'une partie du produit alimentaire n'atteigne une température supérieure à 135 °C.

11. Un système de rétort micro-ondes comprenant :
une zone de préchauffage configurée pour chauffer un milieu liquide dans la zone de préchauffage à une température de 50 °C à 80 °C ;
une zone micro-ondes comprenant :
au moins une source micro-ondes ;
au moins deux applicateurs micro-ondes configurés pour diriger l'énergie micro-ondes de la source micro-ondes vers un produit alimentaire emballé positionné dans la zone de micro-ondes ;
une première section de température micro-ondes dans la zone micro-ondes, la première section de température micro-ondes étant configurée pour immerger le produit alimentaire emballé dans un premier milieu liquide à l'intérieur de la première section de température micro-ondes, pour appliquer l'énergie micro-ondes au produit alimentaire emballé lorsqu'il est immergé, et pour chauffer le milieu liquide à l'intérieur de la première section de température micro-ondes à une première température inférieure à la température de pasteurisation lors de la pasteurisation du produit alimentaire emballé ou inférieure à la température de stérilisation lors de la stérilisation du produit alimentaire emballé ; et
une seconde section de température micro-ondes dans la zone micro-ondes en aval de la première section de température micro-ondes, la seconde section de température micro-ondes étant configurée pour immerger le produit alimentaire emballé dans un milieu liquide à l'intérieur de la seconde section de température micro-ondes, pour appliquer l'énergie micro-ondes au produit alimentaire emballé lorsqu'il est immergé, et pour chauffer le milieu liquide à l'intérieur de la seconde section de température micro-ondes à une seconde température supérieure à la première température, mais ne dépassant pas la température de pasteurisation lors de la pasteurisation du produit alimentaire emballé ou la température de stérilisation lors de la stérilisation du produit alimentaire emballé ; et
un dispositif d'acheminement configuré pour acheminer le produit alimentaire emballé de la zone de préchauffage à la zone micro-ondes.

12. Le système de rétort micro-ondes selon la revendication 11, dans lequel la zone micro-ondes comprend au moins trois sections de température micro-ondes.

13. Le système de rétort micro-ondes selon la revendication 11, dans lequel la zone micro-ondes comprend une pluralité de sections de température micro-ondes comprenant la première section de température micro-ondes et la seconde section de température micro-ondes, la pluralité de sections de température micro-ondes comprenant en outre 3 à 10 sections de température micro-ondes supplémentaires.

14. Le système de rétort micro-ondes selon la revendication 11, comprenant en outre une zone de maintien en aval de la zone micro-ondes configurée pour maintenir le produit alimentaire emballé à une température de stérilisation ou de pasteurisation souhaitée.

15. Le système de rétort micro-ondes selon la revendication 14, comprenant en outre un séparateur d'eau chaude/froide entre la zone micro-ondes et la zone de maintien.
